## Europäisches Patentamt
## European Patent Office
## Office européen des brevets

(19)

(11) Numéro de publication: **0 121 597**
**B1**

(12) # FASCICULE DE BREVET EUROPÉEN

(45) Date de publication du fascicule du brevet:
**14.01.87**

(21) Numéro de dépôt: **83111574.6**

(22) Date de dépôt: **25.03.81**

(51) Int. Cl.⁴: **A 01 B 59/00,** A 01 D 85/00,
A 01 F 15/00

(54) **Presse à balles.**

(43) Date de publication de la demande:
**17.10.84 Bulletin 84/42**

(45) Mention de la délivrance du brevet:
**14.01.87 Bulletin 87/3**

(84) Etats contractants désignés:
**DE FR GB IT NL**

(56) Documents cité:
**FR-A-2 173 858**
**FR-A-2 344 215**
**US-A-4 000 911**
**US-A-4 123 082**

(73) Titulaire: **JOHN DEERE (Société Anonyme), 10,
Rue du Paradis, F-45140 St. Jean de la Ruelle -
Ormes (FR)**

(72) Inventeur: **Giani, Angel, Avenue Jean Dominique,
F-70100 Gray- la- Ville (FR)**

(74) Mandataire: **Pruvost, Marc Henri, Cabinet ORES 6,
Avenue de Messine, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 121 597 B1

LIBER, STOCKHOLM 1987

## Description

La présente invention se rapporte aux presses à balles, du type destiné à former des balles cylindriques ou rondes à partir de produits de récolte ramassés sur le sol.

Il existe déjà des presses à balles attelées à un tracteur, formant des balles cylindriques ou rondes de grand diamètre, qui lors de leur progression ramassent les produits de récolte à partir d'un andain au moyen d'un mécanisme ramasseur, pour les transférer vers l'arrière à un orifice d'entrée débouchant dans une chambre dans laquelle ces produits sont roulés en une balle entre un transporteur supérieur et un transporteur inférieur formés de bandes ou courroies parallèles, la balle tournant, au cours de sa formation, autour d'un axe horizontal.

Il arrive fréquemment que l'andain soit plus étroit que le mécanisme ramasseur et que l'orifice d'entrée dans la chambre de formation de la balle, qui s'étend transversalement à l'andain. En conséquence, les produits de récolte ne sont amenés qu'à une partie seulement de la largeur de cet orifice d'entrée, ce qui à son tour donne une balle dont la section droite n'est pas uniforme sur toute sa longueur. Par exemple, si les produits de récolte sont plus denses dans la partie médiane de l'orifice d'entrée, la balle résultante va avoir une forme en tonneau.

Afin de remédier à cet inconvénient, le conducteur du tracteur auquel la presse est attelée dirige habituellement son véhicule de façon telle que la presse suive un trajet sinueux, avec un balayage latéral par rapport à l'andain, et l'andain se présente ainsi au ramasseur dans une zone se déplaçant progressivement sur sa largeur et fournissant une balle ayant un diamètre en section droite uniforme. Parmi d'autres inconvénients résultant d'une conduite sinueuse du tracteur, il faut mentionner le fait que le conducteur ne dispose plus alors que de peu de temps pour des tâches autres que la surveillance de ce serpentement.

Afin d'éviter la nécessité d'un tel serpentement, il a été proposé, dans le brevet U.S. 4 065 914, de monter un système hydraulique à piston et cylindre ou vérin entre le châssis de la presse et une barre d'attelage raccordée au tracteur, ce vérin étant relié à pivotement à un côté du châssis de la presse. Le conducteur peut alors diriger la presse à balles en actionnant le système formant vérin pour faire pivoter la presse autour de sa liaison pivotante, de sorte que la presse subit un mouvement de serpentement tandis que le tracteur progresse selon sa route normale. Toutefois avec un tel agencement, le conducteur doit diriger à la fois la presse à balles et le tracteur.

Un but de l'invention est de remédier aux inconvénients des presses à balles connues.

L'invention concerne en conséquence une presse à balles destinée à être attelée à un tracteur, comportant une chambre pour la formation d'une balle cylindrique à partir de produits de récolte ramassés sur le sol et un orifice d'entrée débouchant dans cette chambre, des moyens comprenant un ramasseur, pour ramasser les produits de récolte reposant sur le sol en un andain de largeur inférieure à la largeur de l'orifice d'entrée de la chambre de formation d'une balle cylindrique et pour les amener à cet orifice d'entrée, et des moyens de direction ou guidage, pour guider la presse latéralement par rapport à l'andain afin de diriger les produits de récolte vers des parties différentes sur la largeur de l'orifice d'entrée, en vue de la formation d'une balle de diamètre sensiblement régulier sur toute sa longueur, caractérisée en ce que ces moyens de direction ou guidage comprennent deux organes disposés transversalement à la direction de déplacement de la presse, ces organes étant reliés ou pouvant être reliés au tracteur et à la presse respectivement et étant mobiles l'un par rapport à l'autre dans la direction transversale, de sorte que la presse se déplace transversalement à l'andain, un dispositif d'actionnement étant prévu pour assurer ce déplacement relatif.

Suivant une réalisation paraissant judicieuse, ce dispositif d'actionnement est formé par un système à piston et cylindre ou vérin relié aux organes pour assurer leur déplacement relatif.

Les organes précités sont constitués avantageusement par des poutres ou analogues, dont l'une peut comporter une languette ou un profilage longitudinal, tandis que l'autre présente une rainure longitudinale correspondante ou un profilage analogue dans lequel la languette est montée de façon coulissante pour permettre ce déplacement relatif. Le dispositif d'actionnement, notamment le vérin, est alors monté entre les deux poutres conjuguées.

La description qui va suivre, faite en regard des dessins annexés, donnés à titre non limitatif, permettra de mieux comprendre l'invention.

La Fig. 1 est une vue en perspective depuis l'avant et depuis la gauche d'une presse pour la formation de balles cylindriques ou rondes de grand diamètre, correspondant à un mode de réalisation de l'invention.

La Fig. 2 est une vue de profil depuis la gauche de la presse à balles suivant la Fig. 1, une partie de la paroi latérale étant arrachée pour montrer une balle en cours de formation.

La Fig. 3 est une vue en plan de la presse à balles reliée à un tracteur par lequel elle est remorquée, mais comportant un organe d'attelage ou timon différent, correspondant à un autre mode de réalisation de l'invention.

La Fig. 4 est une représentation schématique montrant en particulier un système hydro-électrique comprenant un mécanisme de guidage et un dispositif de détection pour guider la presse représentée sur les Fig. 1 et 2 ou sur la Fig. 3.

La Fig. 5 est un diagramme de détail d'un circuit comparateur prévu dans le dispositif détecteur visible sur la Fig. 4.

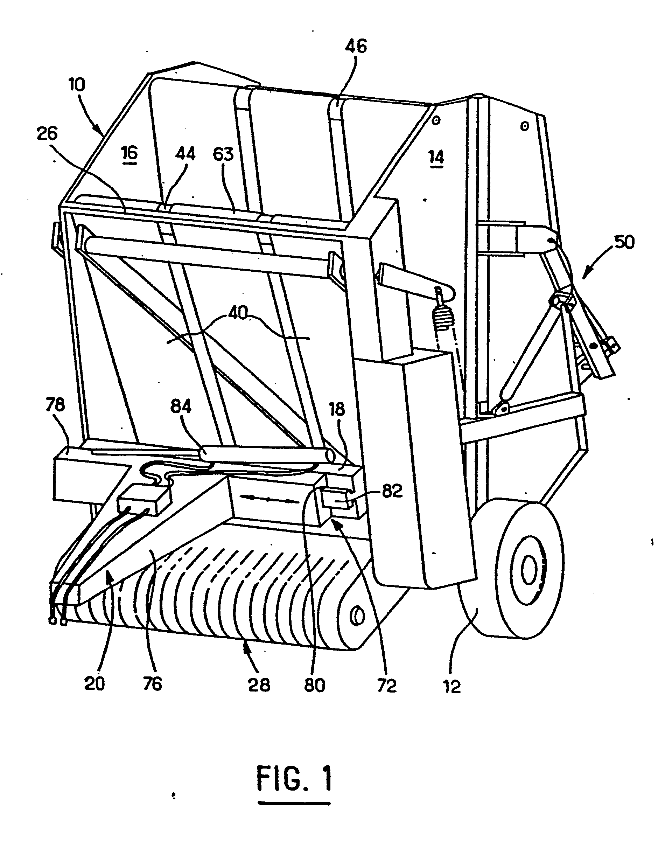

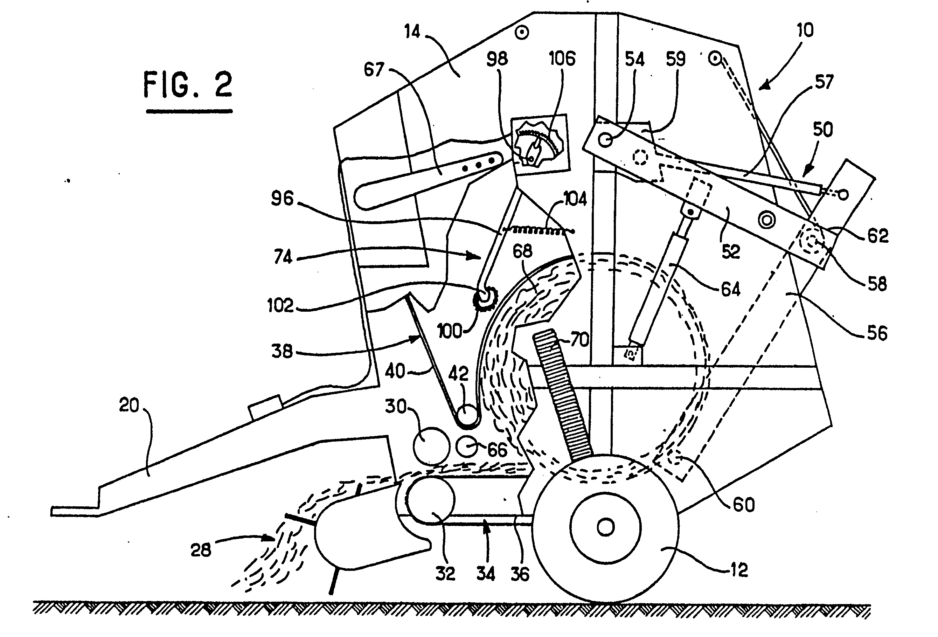

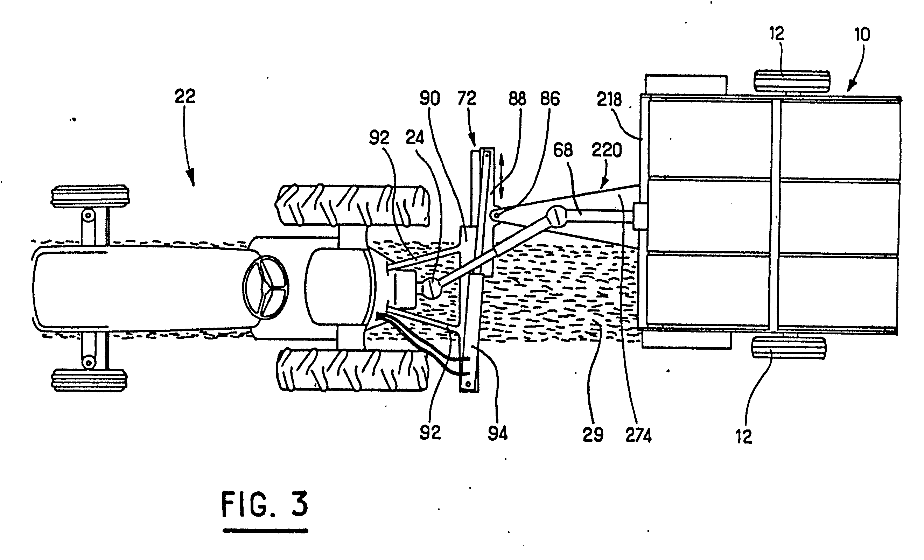

On a représenté sur les dessins une presse pour la formation de balles cylindriques ou rondes de grand diamètre à partir de fourrage ou analogue, comprenant un châssis principal mobile 10 monté sur une paire de roues 12. Le châssis principal comprend deux parois latérales verticales opposées gauche et droite 14 et 16 s'étendant dans le sens antéro-postérieur, qui délimitent entre elles une chambre de formation de la balle. Une poutre transversale 18 (Fig. 1) ou une poutre 218 (Fig. 3) relie les extrémités avant des parois latérales 14 et 16, et un organe d'attelage ou timon creux 20 (Fig. 1 et 2) ou un timon 220 (Fig. 3) s'étend vers l'avant depuis le milieu de la poutre transversale 18 ou 218, pour atteler la presse à un tracteur 22 (visible seulement sur la Fig. 3) équipé d'un mécanisme de prise de force arrière classique 24. Le châssis principal comprend également une traverse supérieure 26 reliant les parois latérales au-dessus de la poutre 18.

Un mécanisme ramasseur 28, qui est de construction classique et qui en conséquence ne sera pas décrit en détail, est monté sur le châssis principal 10 de façon à pouvoir être réglé verticalement au moyen d'une paire de bras (non représentés) pouvant pivoter verticalement, ce mécanisme ramasseur s'étendant sur la largeur du châssis principal en avant de la chambre de formation de la balle et agissant pour soulever les produits de récolte à partir d'un andain 29 reposant sur le sol pendant la progression de la presse et pour les transférer vers l'arrière. Deux rouleaux de compression transversaux 30 et 32 tournant en sens opposés s'étendent entre les parois latérales 14 et 16 immédiatement derrière le mécanisme ramasseur 28, lequel amène les produits de récolte en direction de l'arrière à la commissure ménagée entre les rouleaux 30 et 32, qui à leur tour transfèrent les produits de récolte sous la forme d'une nappe sur un transporteur 34 du type à bande. Le transporteur 34 s'étend sur toute la largeur de la presse entre les parois latérales 14 et 16 et comprend une bande sans fin 36 qui passe autour du rouleau de compression inférieur 32 et d'un rouleau arrière (non représenté). Deux rouleaux intermédiaires (également non représentés) s'étendent entre les parois latérales opposées et supportent le brin supérieur de la bande 36, ces rouleaux se trouvant sensiblement dans le même plan horizontal que le rouleau de compression inférieur 32, de sorte que le brin supérieur du transporteur 36 est sensiblement horizontal.

Un transporteur supérieur du type à bandes ou courroies 38 est disposé entre les parois latérales opposées 14 et 16 au-dessus du transporteur inférieur 34 et comprend un certain nombre de bandes ou courroies 40 qui sont disposées côte à côte sur la largeur de la presse. Les bandes passent autour d'un rouleau inférieur avant 42, d'un rouleau supérieur avant 44 et de deux rouleaux supérieurs intermédiaires dont l'un est indiqué en 46, qui s'étendent entre les parois latérales opposées et qui sont en contact avec les faces intérieures des bandes 40.

Un système de porte arrière 50 comprend deux bras supérieurs 52 dont les extrémités avant sont reliées respectivement aux parois latérales opposées 14 et 16 par des pivots 54, et deux bras inférieurs 56 qui sont reliés respectivement à pivotement aux extrémités arrière des bras supérieurs 52 par des pivots transversaux 58, seuls les bras situés du côté gauche de la machine étant représentés. Deux tiges 57 s'étendent respectivement entre les extrémités supérieures des bras inférieurs 56, au-dessus des pivots 58, et des consoles 59 prévues sur les parois latérales opposées 14, 16. Un rouleau arrière inférieur 60 tourne entre les extrémités inférieures des bras inférieurs 56, tandis qu'un rouleau supérieur 62 s'étend entre ces bras inférieurs coaxialement aux pivots 58, le transporteur 38 passant également autour des rouleaux 60 et 62. Deux vérins hydrauliques 64 (dont un seul est représenté) s'étendent respectivement entre les parois latérales opposées et les bras supérieurs 52, pour faire pivoter ces bras de façon synchrone autour de leurs pivots 54 afin d'ouvrir ou de fermer le système de porte 50.

Les transporteurs supérieur et inférieur 38, 34, de même que les rouleaux de compression 30, 32, un rouleau séparateur 66 disposé sous le rouleau 42 et le mécanisme ramasseur 28 sont entraînés par des transmissions par courroies classiques situées du côté gauche de la presse, la force motrice nécessaire pour les transmissions par courroies étant fournie de la façon usuelle par un arbre d'entraînement 68 s'étendant dans le sens antéro-postérieur, situé au-dessus du timon d'attelage 20, l'extrémité avant de cet arbre d'entraînement pouvant être reliée au mécanisme de prise de force 24 du tracteur (Fig. 3). L'extrémité arrière de l'arbre d'entraînement 68 est reliée à un arbre d'entrainement transversal (non représenté) par un couple de pignons coniques usuels, l'extrémité gauche de cet arbre transversal formant l'entrée des différentes transmissions par courroies destinées aux organes menés de la presse.

Initialement, pendant l'opération de formation de la balle, le rouleau inférieur arrière 60 se trouve dans une position située en avant de celle montrée sur la Fig. 2, et environ à mi-chemin sur la longueur du transporteur 34. Quand les produits de récolte sont amenés en nappe sur la face supérieure du brin supérieur du transporteur inférieur 34, la nappe se déplace vers l'arrière jusqu'à ce qu'elle vienne en contact avec le brin inférieur, qui se déplace vers le haut et vers l'avant, du jeu de bandes supérieur, ce qui déclenche le processus d'enroulement de la nappe de produits de récolte. Le rouleau séparateur transversal 66 occupe une position telle qu'il sépare ou décolle les produits de récolte des bandes 40, de sorte que ces produits ne passent pas entre le rouleau de compression supérieur 30 et le rouleau 42, le rouleau séparateur 66 définissant l'extrémité avant de la chambre de formation de la balle, tandis que le rouleau arrière déplaçable 60 en définit l'extrémité arrière. Au fur et à mesure de l'augmentation de diamètre de la balle 68, le système de porte arrière 50 pivote vers l'arrière, les tiges 57 obligeant l'extrémité inférieure des bras inférieurs 56 à se déplacer approximativement en ligne droite jusqu'à ce que le rouleau arrière 60 se trouve au-dessus de l'extrémité arrière du transporteur inférieur 34.

Bien entendu, pendant l'augmentation de diamètre de la balle, les bandes 40 doivent permettre des distances nettement accrues entre le rouleau inférieur arrière 60 et le rouleau inférieur avant 42, et un mécanisme classique de compensation de longueur, dont un ressort 70 faisant partie d'une paire de ressorts disposés de part et d'autre de la presse est représenté sur la Fig. 2, est prévu pour fournir la longueur de bandes requise. Les ressorts 70 fournissent une tension accrue dans les bandes 40 lors de l'augmentation de diamètre de la balle, la tension des bandes supérieures comprimant les produits de récolte en une balle.

Quand la formation de la balle 65 est terminée, le conducteur du tracteur fait normalement arrêter la presse pour interrompre l'admission des produits de récolte fournis par le mécanisme ramasseur 28. Le conducteur actionne alors une valve (non représentée) provoquant la sortie des cylindres 64 et ainsi le pivotement vers le haut du système de porte 50, de sorte que la balle complètement formée est éjectée par la porte jusque sur le sol.

On voit sur la Fig. 3 que l'andain 29 est nettement plus étroit que la largeur du mécanisme ramasseur 28. En conséquence, les produits de récolte ne vont être amenés, à un moment donné, qu'à une partie seulement de la commissure entre les rouleaux de compression 30, 32. Si une intervention remédiant à ce phénomène n'a pas lieu, la balle formée dans la chambre ne va pas être uniforme et va avoir un diamètre plus grand dans la partie correspondant à la zone de la commissure alimentée en produits de récolte.

Afin de résoudre ce problème, un mecanisme de guidage 72 est prévu pour déplacer latéralement la presse à balles, de telle sorte que les produits de récolte provenant de l'andain parviennent à la partie de la commissure qui est requise pour former une balle uniforme. Il est également prévu un dispositif détecteur ou palpeur 74 qui à la fois détecte les diamètres non uniformes de la section droite de la balle en cours de formation et déclenche le mouvement approprié du mécanisme de guidage. L'agencement va maintenant en être décrit en détail.

Le timon 20 représenté sur la Fig. 1 a en plan une forme de T, sa branche longitudinale 76 allant en divergeant vers l'arrière et étant reliée au tracteur par des moyens classiques par son extrémité avant, tandis que sa branche transversale 78 comporte dans sa face arrière une rainure 80 qui s'étend sur la longueur de cette partie. La rainure 80 reçoit de façon coulissante une languette correspondante 82 prévue sur la poutre transversale 18, cette rainure et cette languette étant profilées de manière à réaliser une liaison à coulisse à queue d'aronde entre le timon 20 et le châssis principal 10 de la presse, ce qui permet un déplacement de ce châssis 10 transversalement à la direction de déplacement du tracteur.

Un système à piston et cylindre ou vérin 84, relié à pivotement par ses extrémités respectivement à la branche transversale 78 du timon et à la poutre 18, fournit la force servant à provoquer ce déplacement transversal.

Le timon 220 du mode de réalisation que montre la Fig. 3 diffère de celui représenté sur les Fig. 1 et 2 par le fait qu'il comprend une branche longitudinale 274 rendue solidaire par son extrémité arrière de la poutre transversale 218. A son extrémité avant, cette partie longitudinale est reliée en 86 à une traverse 88 qui est reliée par un système à coulisse à queue d'aronde à une autre traverse 90, laquelle est à son tour reliée rigidement à deux barres 92 portées par le tracteur 22. Cette liaison à queue d'aronde agit de la même manière que celle réalisée entre la poutre 18 et la partie transversale 78 dans le mode de réalisation que montrent les Fig. 1 et 2, et elle est de même conjuguée à un vérin 94 pour provoquer le déplacement transversal de la traverse 88 et avec elle du châssis principal 10.

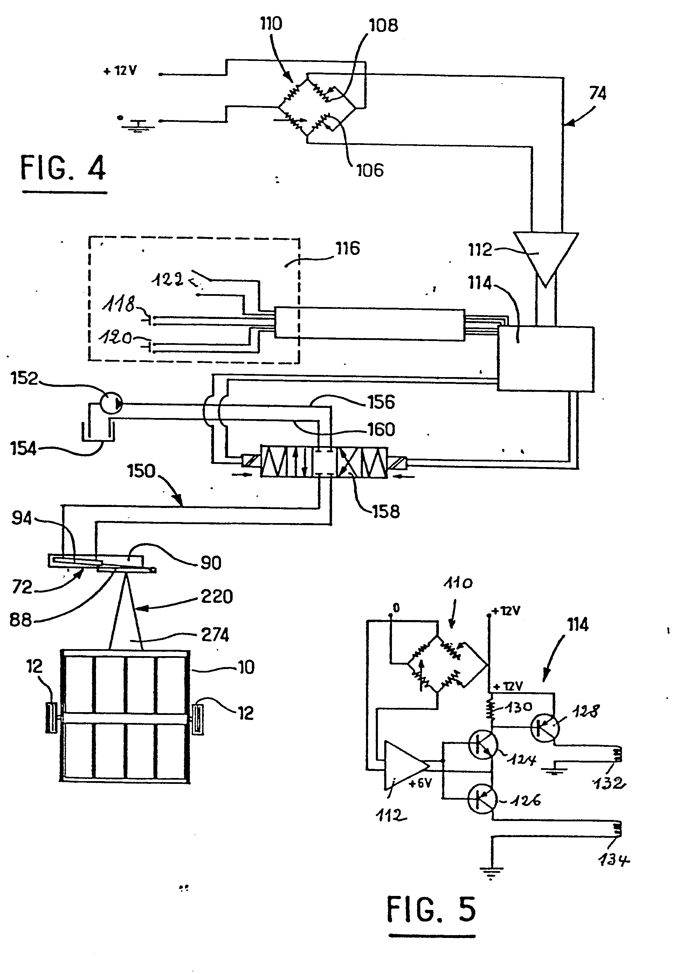

Les agencements représentés sur les Fig. 1 et 2 et sur la Fig. 3 utilisent le même dispositif palpeur 74, qui est illustré sur les Fig. 2 et 4.

Si l'on se reporte tout d'abord à la Fig. 2, un premier bras de levier 96 est monté à pivotement vers son extrémité supérieure sur une barre horizontale 98 fixée sur le châssis, ce bras 96 s'étendant vers le bas et vers l'avant à partir de cette barre et portant à son extrémité inférieure un petit galet de calibrage en caoutchouc 100 qui peut tourner librement autour d'un axe horizontal 102 et qui est en contact avec la surface orientée radialement vers l'extérieur de l'une des bandes 40, de sorte que le galet va être déplacé vers l'extérieur lors de l'augmentation de diamètre de la balle 68. Le bras de levier 96 est soumis à la sollicitation d'un ressort 104 qui s'oppose à ce mouvement.

Le premier bras de levier 96 est monté dans une position quelque peu écartée de l'extrémité gauche de la balle, c'est-à-dire de la paroi latérale 14, et un second bras de levier similaire (non représenté) est monté à une distance correspondante de l'autre extrémité de la balle.

La branche la plus courte du premier bras de levier 96, qui s'étend au-dessus de la barre formant pivot 98, est reliée à une résistance variable 106, de sorte que le mouvement du bras fait varier la valeur efficace de cette résistance. De la même manière, le second bras de levier est relié à une résistance variable 108. Les résistances 106, 108 font partie d'un circuit en pont électrique classique 110 auquel un potentiel de 12 volts par exemple est appliqué. Le pont sert en fait à comparer les valeurs efficaces des deux résistances 106, 108, qui bien entendu constituent une mesure des positions des premier et second bras de leviers et par suite des diamètres de la balle dans les parties correspondant à ces bras.

La sortie électrique du pont 110 est appliquée à un amplificateur 112 et le signal amplifié est transmis à un circuit de correction automatique 114. Une commande manuelle prioritaire indiquée d'une façon générale en 116 est prévue. Elle comprend des interrupteurs manuels 118 et 120 dont le rôle sera indiqué plus loin, ainsi qu'un interrupteur d'arrêt de sécurité 122.

Le circuit de correction 114 est représenté plus en détail sur la Fig. 5, sur laquelle on a montré également le circuit en pont 110 et l'amplificateur 112. On voit que la sortie de cet amplificateur 112 est appliquée aux bases de deux transistors 124, 126 et entre ces deux transistors respectivement. Ce circuit comporte également un troisième transistor 128 dont la base est connectée à un point situé entre l'alimentation, avec interposition d'une résistance fixe 130, et le premier transistor 124. Deux relais de commande de déplacement 132 et 134 sont montés entre les transistors 128 et 126 et la masse respectivement. Les interrupteurs à commande manuelle 118 et 120 permettent d'appliquer de façon prioritaire les tensions requises pour un déplacement latéral de la presse comme indiqué plus loin, tandis que l'interrupteur de securité 122 met le circuit à l'arrêt.

Comme visible sur la Fig. 4, le vérin 94 fait partie d'un circuit hydraulique 150 comprenant une pompe 152 prélevant du liquide à partir d'un réservoir 154 et reliée par une conduite 156 à une électro-valve 158. A partir de cette électro-valve, la conduite 156 est reliée à une extrémité du corps du vérin 94, et une conduite de retour 160 provenant de l'autre extrémité du corps de ce vérin 94 est reliée au réservoir 154 à travers l'électro-valve 158. Le vérin 94 est du type à double effet, et on voit aisément sur la Fig. 4 que le déplacement du tiroir de l'électro-valve 158 dans un sens ou dans l'autre à partir de la position de repos représentée sur la Fig. 4 va provoquer la sortie ou la rentrée du vérin 94, ce qui va assurer un déplacement latéral correspondant du châssis de la presse.

Les solénoïdes de l'électro-valve 158 sont constitués par les enroulements de relais 132 et 134, la connexion avec le circuit de correction étant assurée par des conducteurs comme indiqué sur la Fig. 4, et on comprendra que les sens d'actionnement de l'électro-valve et en conséquence de déplacement du châssis de la presse sont déterminés en vue d'une correction par compensation des irrégularités de diamètre détectées par les galets palpeurs 100.

Ainsi, quand un diamètre non uniforme de la balle en cours de formation 68 est détecté comme indiqué précédemment, par exemple si un diamètre plus petit apparait à l'extrémité droite de la balle, un signal électrique provenant du circuit de correction 114 est appliqué de manière à déplacer la valve 158 vers la droite et le vérin 94 va se raccourcir en provoquant un coulissement de la traverse 88 vers l'intérieur de la traverse fixe 90, c'est-à-dire vers la gauche, de sorte que le châssis principal va également être déplacé vers la gauche. Il s'ensuit que l'andain 29 va être alors présenté vers la partie droite de la chambre de formation de la balle et qu'il va en résulter une augmentation de diamètre de la partie correspondante de cette balle, ce qui va ramener ladite partie au diamètre correct. Il est évident qu'au fur et à mesure de cette alimentation le diamètre va augmenter et va dépasser celui atteint en un autre point de la longueur de la balle. Cette différence va être détectée et le vérin 94 va être à nouveau commandé pour déplacer le châssis principal jusqu'à une position telle que les produits de l'andain 29 parviennent dans la partie de la balle ayant un diamètre plus faible. Etant donné que tout ceci se produit automatiquement, le conducteur du tracteur doit seulement porter son attention sur la conduite du véhicule afin de lui faire suivre une route normale correspondant à l'andain. Ce dispositif detecteur fait l'objet d'une autre demande, EP-A-00 60 956, déposée à la même date.

Dans le cas du mode de réalisation que montre la Fig. 1, le vérin 84 est agencé et monté de façon à sortir pour déplacer le châssis 10 vers la droite et à se raccourcir pour le déplacer vers la gauche. Ceci peut être considéré non seulement comme une variante par rapport au montage du vérin 94 sur la Fig. 3, mais comme un complément à ce vérin 94 quand il est désirable de prévoir des moyens permettant de déplacer le châssis 10 a un degre nettement plus grand que cela n'est possible avec un seul vérin. Si l'on utilise deux vérins, ils peuvent être reliés hydrauliquement de façon à être actionnés simultanément, ou bien ils peuvent être commandés successivement.

Si désiré, des moyens peuvent être prévus pour diriger ou commander directement les roues 12 elles-mémes, afin qu'elles suivent le mouvement de la traverse 88 et (ou) de la poutre 18.

La faculté de direction de la presse peut également être exploitée en ce qui concerne le déchargement d'une balle complètement formée. Dans le type de presse à balles représenté sur les dessins, et comme cela a été indiqué précédemment, la balle est éjectée vers l'arrière à travers la porte relevée, jusque sur le sol. Dans cette position, il n'est pas possible, à moins que la presse ne soit déplacée, de refermer la porte sans que celle-ci vienne heurter et éventuellement endommager la balle. Quand une balle est prête à être éjectée, le dispositif de commande manuelle prioritaire 116 est utilisé pour déplacer complètement le châssis 10 d'un côté. La balle est alors éjectée et le dispositif de commande est utilisé pour ramener complètement le châssis 10 de l'autre côté, ce qui permet de refermer librement la porte.

La presse à balles est agencée de manière à être attelée, dans sa position normale, directement derrière le tracteur, mais le mécanisme de guidage 72 peut être adapté en vue de permettre à la presse d'étre déportée d'un côté du tracteur dans sa position normale. Dans ce dernier cas, le tracteur ne se déplace pas en enjambant l'andain 29, mais plutôt à côté de celui-ci et selon un trajet parallèle.

Suivant une autre variante, le signal nécessaire pour contrôler la forme de la balle pourrait âtre obtenu en prévoyant de petits galets de caoutchouc 100 des deux côtés de la balle et sur son axe médian, pour détecter la différence de "mou" dans les bandes de formation de la balle, le signal final pour actionner le dispositif de commande de déplacement latéral ou de serpentement résultant d'une comparaison entre tous les signaux individuels.

En outre, bien que l'on ait décrit ci-avant, pour assurer le déplacement latéral du châssis de la presse, une commande hydro-électrique, il va de soi que cette commande, y compris l'étage de comparaison et de correction, pourrait être assurée entièrement par voie électrique ou hydraulique, ou bien par des moyens électromécaniques, hydro-mécaniques ou analogues, la détection étant transmise elle-même par des moyens électriques, hydrauliques ou mécanigues.

D'autres modifications encore peuvent être apportées aux modes de réalisation décrits, dans le domaine des équivalences techniques.

**Revendications**

1.- Presse à balles destinée à être attelée à un tracteur, comportant une chambre pour la formation d'une balle cylindrique à partir de produits de récolte ramassés sur le sol et un orifice d'entrée débouchant dans cette chambre, des moyens comprenant un ramasseur, pour ramasser les produits de récolte reposant sur le sol en un andain de largeur inférieure à la largeur de l'orifice d'entrée de la chambre de formation d'une balle cylindrique et pour les amener à cet orifice d'entrée, et des moyens de direction ou guidage, pour guider la presse latéralement par rapport à l'andain afin de diriger les produits de récolte vers des parties différentes sur la largeur de l'orifice d'entrée, en vue de la formation d'une balle de diamètre sensiblement régulier sur toute sa longueur, caractérisée en ce que ces moyens de direction ou guidage (72) comprennent deux organes (18, 78, 88, 90) disposés transversalement à la direction de déplacement de la presse, ces organes étant reliés ou pouvant être reliés au tracteur (20) et à la presse (10) respectivement et étant mobiles l'un par rapport à l'autre dans la direction transversale, de sorte que la presse se déplace transversalement à l'andain (29), un dispositif d'actionnement (84, 94) étant prévu pour assurer ce déplacement relatif.

2.- Presse à balles suivant la revendication 1, caractérisée en ce qu'un système à piston et cylindre ou vérin (84, 94) est relié aux organes (18, 78, 88, 90) pour assurer leur déplacement relatif.

3.- Presse à balles suivant la revendication 1 ou 2, caractérisée en ce que ces organes (18, 78, 88, 90) sont constitués par une poutre ou analogue, l'une de ces poutres (18, 88) présentant une languette (82) ou un profilage longitudinal, tandis que l'autre poutre (78, 90) présente une rainure longitudinale correspondante (80) ou un profilage analogue dans lequel cette languette est montée de façon coulissante pour permettre ce déplacement relatif.

4.- Presse à balles suivant la revendication 3, caractérisée en ce que la presse (10) comprend un châssis principal muni de parois latérales (14, 16) l'une des poutres (18)·s'étendant entre les extrémités avant de ces parois latérales.

5.- Presse à balles suivant la revendication 4, caractérisée en ce que l'autre poutre (78) forme la branche transversale d'un élément en forme de T (20) dont la branche longitudinale (76) peut être reliée à pivotement à un tracteur.

6.- Presse à balles suivant la revendication 3, caractériséeen ce qu'une desdites poutres (88) est reliée de façon pivotante à un timon (220) lui-même relié rigidement au châssis principal de la presse (10).

**Patentansprüche**

1. Ballenpresse die zum Anhängen an einen Traktor bestimmt ist und eine Kammer zur Bildung eines zylindrischen Ballens aus Ernteprodukten, die vom Boden aufgesammelt werden, und eine Eintrittsöffnung, die in die Kammer mündet, umfaßt, ferner Mittel, welche einen Aufsammler zum Aufsammeln der auf dem Boden in Form eines Schwades von gegenüber der Breite der Eintrittsöffnung der Kammer zur Bildung des zylindrischen Ballens geringerer Breite liegenden Ernteprodukte und zum Einbringen dieser in die Eintrittsöffnung aufweisen, sowie Leit- oder Führungsmittel, um die Presse seitlich in Bezug auf den Schwad zu führen, und so die Ernteprodukte zu verschiedenen Bereichen der Breite der Eintrittsöffnung zu dirigieren, und zwar im Hinblick auf die Bildung eines Ballens von im wesentlichen regelmäßigem Durchmesser auf seiner ganzen Länge, dadurch gekennzeichnet, daß die Leit- oder Führungsmittel (72) zwei Organe (18,78,88,90) aufweisen, die quer zur Richtung der Fortbewegung der Presse angeordnet sind, und daß diese Organe mit dem Traktor (20) bzw. mit der Presse (10) verbunden sind oder verbunden werden können und in Querrichtung relativ zueinander bewegbar sind, derart, daß sich die Presse gegenüber dem Schwad (29) in Querrichtung verstellt, und daß eine Betätigungsvorrichtung (84, 94) vorgesehen ist, um diese Relativverstellung sicherzustellen.

2. Ballenpresse nach Anspruch 1, dadurch gekennzeichnet, daß ein System aus einem Kolben und einem Zylinder oder einer Hubeinrichtung (84, 94) mit den Organen (18, 78, 88, 90) verbunden ist, um ihre relative Verstellung sicherzustellen.

3. Ballenpresse nach Anspruch 1 oder 2, dadurch gekennzeichnet, daß die Organe (18, 78, 88, 90) durch einen Träger oder einen analogen Teil gebildet sind, wobei einer der Träger (1B, 88) eine Feder (82) oder ein langgestrecktes Profil darbietet, während der andere Träger (78, 90) eine korrespondierende Längsnut (80) oder ein analoges Profil darbietet, in welches die Feder verschieblich eingreifend montiert ist, um die relative Verschiebung zu ermöglichen.

4. Ballenpresse nach Anspruch 3, dadurch gekennzeichnet, daß die Presse (10) ein Hauptchassis umfaßt, welches mit seitlichen Wänden (14, 16) ausgerüstet ist, wobei einer der Träger (18) sich zwischen den vorderen äußeren Teilen dieser seitlichen Wände erstreckt.

5. Ballenpresse nach Anspruch 4, dadurch gekennzeichnet, daß der andere Träger (78) den Querarm eines Elementes in T-Form (20) bildet, dessen Längsarm (76) schwenkbar mit einem Traktor verbunden werden kann.

6. Ballenpresse nach Anspruch 3, dadurch gekennzeichnet, daß einer der genannten Träger (88) schwenkbar mit einer Deichsel (220) verbunden ist, die ihrerseits starr mit dem Hauptchassis der Presse (10) verbunden ist.

## Claims

1. A baler to be coupled to a tractor, comprising a chamber for the formation of a cylindrical bale from harvested products collected from the ground and an inlet port opening into this chamber, means comprising a pick-up for picking up the harvested products lying on the ground in a windrow smaller in width than the inlet port of the chamber for the formation of a cylindrical bale and for feeding them to this inlet port, directing and guiding means for guiding the baler laterally in relation to the windrow in order to direct the harvested products towards different parts over the width of the inlet port with a view to forming a bale of approximately uniform diameter over all its length, characterized in that these directing or guiding means (72) comprise two members (18, 78, 88, 90) arranged at right angles to the direction of movement of the baler, these members being connected or being capable of connection with the tractor (20) and the baler (10) respectively and being movable relative to each other in the transverse direction, such that the baler moves at right angles to the windrow (29), an actuating device (84, 94) being provided to ensure this relative movement.

2. A baler according to claim 1, characterized in that a piston and cylinder system or jack (84, 94) is connected to the members (18, 78. 88, 90) to ensure their relative movement.

3. A baler according to claim 1 or claim 2, characterized in that these members (18, 78, 88, 90) consist of a beam or the like, one of these beams (18, 88) having a tongue (82) or longitudinal shaping, while the other beam (78, 90) has a corresponding longitudinal groove (80) or similar shaping in which this tongue is mounted slidingly to allow this relative movement.

4. A baler according to claim 3, characterized in that the baler (10) comprises a main frame fitted with lateral walls (14, 16), one of the beams (18) extending between the front ends of these lateral walls.

5. A baler according to claim 4, characterized in that the other beam (78) forms the transverse arm of a T-shaped member (20) whose longitudinal arm (76) can be connected pivotally to a tractor.

6. A baler according to claim 3, characterized in that one of the said beams (88) is connected pivotally to a drawbar (220) itself connected rigidly to the main frame of the baler (10).

0 121 597

FIG. 1

FIG. 2

FIG. 3

FIG. 4

FIG. 5